# EUROPEAN PATENT APPLICATION

(11) **EP 2 541 343 A1**
(43) Date of publication of application: **02.01.2013**
(21) Application number: 11005309.7
(22) Date of filing: 29.06.2011
(51) Int. Cl.: G03H 1/00

(54) **Hologram and method of forming a hologram**

(71) Applicant: Sony DADC Austria AG, 5081 Anif (AT)
(72) Inventor: Perlot, Stefan, 5300 Hallwang (AT); Höpoldseder, Erich, 5081 Anif (AT)
(74) Representative: Müller - Hoffmann & Partner

(57) **Abstract**

A hologram comprises a holographic layer comprising a photosensitive layer, holographic structures being formed in the holographic layer using a light source having at least a first wavelength, and a luminescent material, the luminescent material being configured to absorb the first wavelength, and to emit light having a second wavelength.

A method of forming a hologram comprises exposing portions of a photosensitive layer to a light source having at least a first wavelength to form holographic structures in the photosensitive layer, selecting a luminescent material, the luminescent material being configured to absorb the first wavelength, and to emit light having a second wavelength, and incorporating the luminescent material into the hologram.

## Description

### FIELD OF THE INVENTION

The present application relates to a hologram as well as to a method of forming a hologram.

### BACKGROUND

Holograms have become widely used to determine whether or not sovereign documents such as banknotes, passports, ID cards and other personalized documents as well as credit cards are genuine or fake. Further, holograms are used to secure brand products from counterfeit. Examples for holograms comprise emboss type holograms in which an interference film is unevenly formed as is, for example, described in US 2002/0191234. Further examples comprise volume type holograms, in which the refractive index of an interference film is spatially modulated. In order to improve security, it is an important issue to protect the holograms themselves from making copies thereof.

### SUMMARY

It is an object of the present invention to provide an improved hologram as well as a method of forming a hologram having improved properties.

According to the present invention, the above objects are solved by the claimed matter according to the independent claims.

### BRIEF DESCRIPTION OF THE DRAWINGS

The accompanying drawings are included to provide a further understanding of embodiments of the invention and are incorporated in and constitute a part of this specification. The drawings illustrate the embodiments of the present invention and together with the description serve to explain the principles. Other embodiments of the invention and many of the intended advantages will be readily appreciated, as they become better understood by reference to the following detailed description. The elements of the drawings are not necessarily to scale relative to each other. Like reference numbers designate corresponding similar parts.
Figure 1 shows a schematic cross-sectional view of a layer stack including a hologram.
Figure 2A shows a schematic cross-sectional view of a holographic layer.
Figure 2B shows a plan view of an example of a hologram.
Figure 3 illustrates an example of a method of forming a hologram.
Figure 4 is a flow diagram of a method of forming a hologram.
Figure 5 shows an embodiment of a device comprising a hologram.
Figure 6 shows an embodiment of a package comprising a hologram.

### DETAILED DESCRIPTION

In the following detailed description reference is made to the accompanying drawings, which form a part hereof and in which are illustrated by way of illustration specific embodiments in which the invention may be practiced. In this regard, directional terminology such as "top", "bottom", "front", "back", "leading", "trailing" etc. is used with reference to the orientation of the Figures being described. Since components of embodiments of the invention can be positioned in a number of different orientations, the directional terminology is used for purposes of illustration and is in no way limiting. It is to be understood that other embodiments may be utilized and structural or logical changes may be made without departing from the scope defined by the claims.

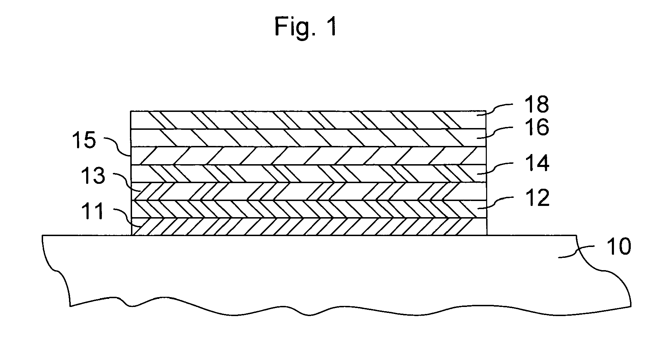

Figure 1 illustrates an example of a layer stack that may form a holographic label. The holographic label may be attached or integrated into a substrate 10. For example, the substrate 10 may be a brand product or a security document or any other item that is to be identified or labelled. The holographic label may be attached or integrated to the substrate. The label comprises an adhesive layer 11 that may be made of a suitable adhesive that is generally known or may be specifically developed. Over the adhesive layer 11, a black film 12 may be disposed. For example, this black film may be made of a common material such as rubber type adhesive film. The black film may be useful if the holographic label is to be used as a reflection hologram to increase contrast between the holographic image and the black background. As is to be clearly understood, the black film 12 may as well be omitted. A holographic layer 14 is attached to the black film 12 by means of a further adhesive layer 13. During the formation of the holographic layer an intermediate film 16 may be used made of a common material such as polyester (PET) film which is coated with the holographic material such as a photosensitive composition as described in US 5,453,340. The holographic layer 14 can be attached to the intermediate film 16 by means of a further adhesive layer 15 or may be coated on the intermediate film 16 which may omit the adhesive layer 15. A cover film 18 that may be used for protecting the hologram against environmental influences may be formed over the intermediate film 16. As is to be clearly understood, the layer stack may comprise further layers. A typical layer stack for a hologram would be adhesive layer11, followed by black film 12, followed by adhesive layer 13, holographic layer 14, intermediate film 16 and cover film 18.

The holographic layer may comprise a volume hologram, for example a transmission or a reflection hologram. Specific types of holograms are Lippmann holograms, Denisjuk holograms, RGB holograms, rainbow hologram, computer-generated or digital holograms.

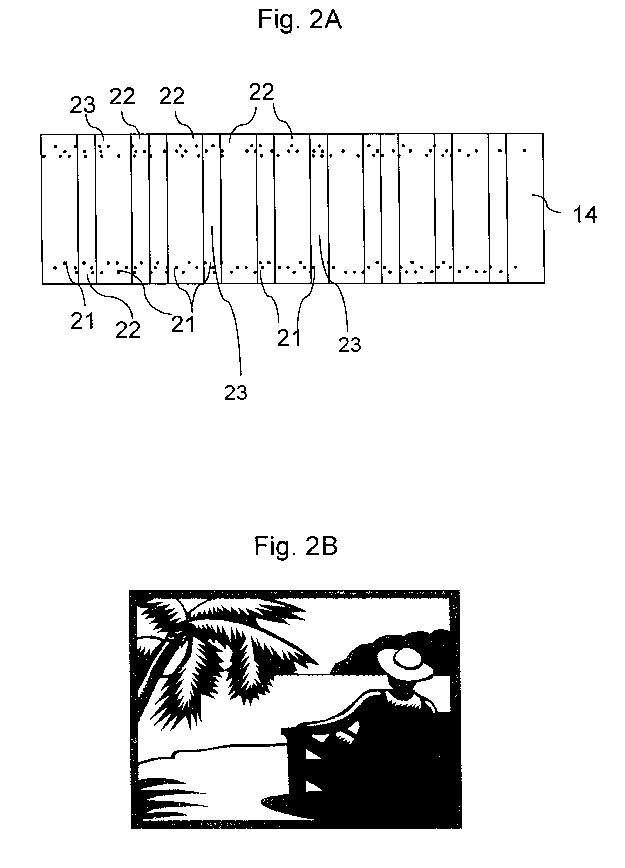

Figure 2A shows a cross-sectional view of an example of a holographic layer 14. The holographic layer 14 may comprise a volume hologram, in which an image, a symbol or data is recorded by means of regions having different refractive indices.

For example, generally a volume or Lippmann type hologram may be manufactured by a content production step in which first an image to be shown in the hologram is formed by, for example, capturing images, converting the image into computer graphic images and editing the obtained images. Thereafter, a hologram master is produced so that a plurality of holograms may be manufactured by a simple copying step. For manufacturing a hologram master, interference fringes of object illumination light of an image and reference light are successively recorded in a holographic layer using production laser light. For example, a wavelength of 100 to 1000 nm, specifically 200 to 900 nm and more specifically 300 to 800 nm and further 400 to 700 nm may be used as production laser light. For copying the master, a further holographic layer is brought into contact with the master and copying laser light is irradiated thereto. The copying laser light can be identical with the production laser light or of a different spectrum. The laser light reflected by the hologram and the (reference) laser light interfere with each other to form interference fringes in the holographic layer. Thereby, the hologram is copied. The holographic layer is a photosensitive material, in which due to irradiation with electromagnetic radiation a modulation of the refractive index takes place. Examples of photosensitive material are given in US 7,824,822, US 7,521,155, US 5,702,846, and US 5,453,340. The holographic layer may comprise a photosensitive composition such as (a) one or more free-radically polymerizable compounds, (b) one or more free-radical polymerization initiators, (c) one or more cationically polymerizable compounds other than (a), (d) one or more initiators for cationic polymerization and (e) optionally further components.

Examples of suitable free-radically polymerizable compounds (a) are acrylic-based monomers, styrene-based monomers and/or vinyl-based monomers. Specific monomers are acrylamide, methacrylamide, phenyl acrylate, 2 phenoxyethyl acrylate, mono(acryloyloxyethyl) naphthalenedicarboxylate, methylphenoxyethyl acrylate, nonylphenoxyethyl acrylate, acryloyloxyethyl hydrogenphthalate, phenoxy polyethylene glycol acrylate, 2,4,6 tribromophenyl acrylate, mono(2-methacryloyloxyethyl) diphenate, benzyl acrylate, 2,3-dibromophenyl acrylate, 2 hydroxy-3 phenoxypropyl acrylate, 2 naphthyl acrylate, N vinylcarbazole, 2 (9 carbazolyl)ethyl acrylate, triphenylmethyl triacrylate, 2-(tricyclo[5.2.1.02,6]dibromodecylthio)-ethyl acrylate, S (1 naphthylmethyl) thioacrylate, dicyclopentanyl acrylate, methylenebisacrylamide, polyethylene glycol diacrylate, trimethylpropane triacrylate, pentaerythritol acrylate, 2 acryloyloxy-ethyl 3-acryloyloxypropyl 2-hydroxydiphenate, 2 acryloyloxyethyl 3-acryloyloxypropyl 2-hydroxy-2,3-naphthalenedicarboxylate, 2-acryloyloxyethyl 3 acryloyloxypropyl 2-hydroxy-4,5-phenanthrenedi-carboxylate, dibromoneopentyl glycol diacrylate, dipentaerythritol hexaacrylate, 1,3-bis[2-acryloyloxy-3-(2,4,6-tribromophenoxy)propoxy]benzene, diethylene dithioglycol diacrylate, 2,2-bis(4-acryloyloxyethoxy-phenyl)propane, bis(4-acryloyloxydiethoxyphenyl)-methane, bis(4-acryloyloxyethoxy-3,5-dibromophenyl)-methane, 2,2-bis(4-acryoyloxyethoxyphenyl)propane, 2,2-bis(4-acryloyloxyethoxy-3,5-dibromophenyl)propane, bis(4-acryoyloxyethoxyphenyl) sulphone, bis(4-acryloyl-oxydiethoxyphenyl) sulphone, bis(4-acryloyloxypropoxy-phenyl) sulphone, bis(4-acryoyloxyethoxy-3,5-dibromo-phenyl) sulphone, styrene and 2-bromostyrene. It will be appreciated that it is also possible to use mixtures of a plurality of the compounds mentioned.

The initiators used for a free-radical polymerization (b) may be any desired free-radical-generating substances, for instance organic dyes with polymer salts, for example cyanines or salts of diphenyl-iodonium and diaryliodonium. Specific examples are anhydro-3,3'-dicarboxymethyl-9-ethyl-2,2'-thiacarbo-cyanine betaine, anhydro-3-carboxymethyl-3',9-diethyl-2,2'-thiacarbocyanine betaine, 3,3',9-triethyl-2,2'-thiacarbocyanine iodide, 3,9-diethyl-3'-carboxymethyl-2,2'-thiacarbocyanine iodide and 3,3',9-triethyl-2,2'-(4,5,4',5',-dibenzo)thiacarbocyanine iodide, 2-[3-(3-ethyl-2-benzothiazolidene)-1-propenyl]-6-[2-(3-(3-ethyl-2-benzothiazolidene)ethylideneimino]-3-ethyl-1,3,5-thiadiazolium iodide, 2-[[3-allyl-4-oxo-5-(3-n propyl-5,6-dimethyl-2-benzothiazolidene)ethylidene-thiazolidene]methyl]3-ethyl-4,5-diphenylthiazolinium iodide, 1,1',3,3,3',3'-hexamethyl-2,2'-indo¬tri¬carbo¬cyanine iodide, 3,3'-diethyl-2,2'-thiatricarbocyanine perchlorate, anhydro-1-ethyl-4-methoxy-3'-carboxymethyl-5'-chloro-2,2'-quinothiacyanine betaine, anhydro-5,5'-diphenyl-9-ethyl-3,3'-disulphopropyloxa-carbocyanine hydroxide triethylamine salt. Specific examples of iodonium salts, for example halides, tetra-fluoro-borates or hexafluorophosphates, are diphenyliodonium, 4,4'-dichlorodiphenyliodonium, (4-methoxyphenyl)phenyl-iodonium, (4-octyloxyphenyl)phenyliodonium, 4,4'-dimethoxydiphenyliodonium, 4,4'-di-tert-butyldiphenyl-iodonium and 3,3'-dinitrodiphenyliodonium salts. It will be appreciated that it is also possible to use mixtures of a plurality of the compounds mentioned.

Component (c) of the photosensitive composition is one or more cationically polymerizable compounds. Examples are glycidyl-based compounds, epoxides or vinyl-based compounds. Specific monomers are diglycerol polyglycidyl ether, pentaerythritol polyglycidyl ether, 1,4-bis(2,3-epoxypropoxyperfluoroisopropyl)cyclohexane, sorbitol polyglycidyl ether, trimethylolpropane poly-glycidyl ether, resorcinol diglycidyl ether, 1,6-hexanediol diglycidyl ether, polyethylene glycol diglycidyl ether, phenyl glycidyl ether, p-t-butyl-phenyl diglycidyl ether, diglycidyl adipate, diglycidyl o-phthalate, dibromophenyl glycidyl ether, dibromo-neopentyl glycol, glycol diglycidyl ether, 1,6-di-methylolperfluorohexane glycidyl ether, 1,2,7,8-di-epoxyoctane, 4,4'-bis(2,3-epoxypropoxyperfluoro-iso-propyl)diphenyl ether, 3,4-epoxycyclohexylmethyl 3',4'-epoxycyclohexanecarboxylate, 3,4-epoxycyclohexyl-oxirane, 1,2,5,6-diepoxy-4,7-methaneperhydroindene, 2-(3,4-epoxycyclohexyl)-3',4'-epoxy-1,3-dioxane-5-spiro-cyclohexane, 1,2 ethylenedioxybis(3,4-epoxycyclohexyl-methane), 4',5'-epoxy-2'-methylcyclohexylmethyl 4,5-epoxy-2-methylcyclohexanecarboxylate, ethylene glycol bis(3,4-epoxycyclohexanecarboxylate), bis(3,4-epoxy-cyclohexylmethyl) adipate, di-2,3-epoxycyclopentyl ether, vinyl 2-chloroethyl ether, vinyl n-butyl ether, triethylene glycol divinyl ether, 1,4-cyclohexane-dimethanol divinyl ether, trimethylolethane trivinyl ether or vinyl glycidyl ether. It is also possible to use combinations of the abovementioned compounds.

Component (d) of the photosensitive composition is an initiator for a cationic polymerization. Suitable compounds here are those which, after decomposition, generate Brønsted or Lewis acids, for example diaryl-iodonium salts, triarylsulphonium salts, iron-allene salts and the like. Examples of diaryliodonium salts are tetrafluoroborates, hexafluorophosphates, hexa-fluoroarsenates and hexafluoroantimonates of iodonium compounds. Examples of triarylsulphonium salts are tetrafluoroborates, hexafluorophosphates, hexafluoro-arsenates and hexafluoroantimonates of sulphonium or triphenylsulphonium compounds, for instance 4-tert-butyltriphenylsulphonium, tris(4-methylphenyl)sulphonium, tris(4-methoxyphenyl)sulphonium, 4-thiophenyltriphenyl-sulphonium. Combinations of a plurality of the compounds mentioned are also suitable.

The photosensitive composition may optionally comprise organic solvents, for example ketones, esters, ethers, dioxanes, hydrocarbons, for instance cyclohexane, halo-hydrocarbons, aromatics, alcohols or mixtures of one or more such solvents. It is also possible to use solvent-free photopolymer compositions. Further possible additives are binders, thermal polymerization inhibitors, silane coupling agents, plasticizers, dyes and/or copolymers. Further examples comprise lithium niobate, barium titanate, and gallium arsenide. Typical layer thicknesses of holographic material are 10nm to 1mm, specifically 100nm to 100µm, more specifically 1µm to 50µm. For example, a holographic layer may comprise a photopolymer in which upon irradiation with light, monomer particles are polymerized in the exposed portion. As the monomer particles are further polymerized, they move to the exposed portion. Thereby, the concentration of monomer particles varies by location. As a result, refractive index modulation occurs. Thereafter, when ultraviolet light or visible light is irradiated on the entire surface of the photopolymer, the monomer particles are completely polymerized. Thereby, a kind of "fixation step" takes place. Since the refractive index of the optical cured photopolymer varies with incident light, interference fringes (brightness and darkness) that occurred due to interference between reference and object illumination light can be recorded as changes of refractive index.

Figure 2A shows an example of a correspondingly manufactured holographic layer 14. As can be seen from the cross-section, portions 21 having a first refractive index are disposed alternately to regions 22 having a second refractive index. Refractive indices are typically in the range of 1,48 to 1,53 where the index modulation is typically 0,03 to 0,04. Furthermore, the hologram comprises a luminescent material. The luminescent material 23 is configured to absorb light having a specific wavelength. In particular, the luminescent material 23 can be configured to absorb light having a wavelength that has been used for producing the hologram. Generally, the wavelength that has been used for producing the hologram determines the minimal structural feature size of the hologram. For example, the minimal structural feature size theoretically may be equal to a fraction of the wavelength, the fraction depending on the geometry used for forming the hologram. Since, as will be explained in the following, the copying conditions are identical or close to the producing conditions of the hologram, the structures will be identically reproduced. Accordingly, there is a relationship between the wavelength that is absorbed by the luminescent material and the minimal structural feature size of the hologram. The luminescent material further is configured to emit light having a second wavelength or more wavelengths. For example, the second wavelength may be identical with the first wavelength. Nevertheless, as will be explained also in the following, the luminescent material 23 may also emit light having a wavelength that is different from the first wavelength. As is shown in Figure 2A, the luminescent material 23 may be incorporated in the holographic layer 14. For example, the luminescent material 23 may extend to such a depth of the holographic layer 14 that the hologram will be destroyed if it is tried to remove the luminescent material 23. Nevertheless, as is to be clearly understood, the luminescent material may as well be disposed in a layer that is different from the holographic layer 14. For example, the luminescent material may be incorporated in any of the other layers 11, 12, 13, 15, 16, and 18. Examples for the luminescent material may comprise the following:

A compound which may comprise an oxide, oxide sulphate or oxide fluoride of an alkali, earth alkali or transition element, lanthanide oxide, lanthanide oxide sulphate or lanthanide oxide fluoride. Optionally, the compound may comprise at least one further element selected from the group consisting of yttrium, lanthanum, cerium, praseodymium, neodymium, samarium, europium, gadolinium, terbium, dysprosium, holmium, erbium, thulium, ytterbium, and lutetium. Optionally, the compound may further comprise at least one dopant selected from oxides and/or fluorides of main group or transition group elements. As has been mentioned above, the second wavelength may be different from the first wavelength. Accordingly, so-called stokes or anti-stokes luminescent substances comprising lanthanoid compounds may be used. Examples thereof are described in WO 00/60527, WO 2008/000461, US 6,802,992 and US 6,686,074.

Figure 2B shows a plan view of an example of a hologram showing a specific pattern which is made from regions having different refractive indices. For example, upon viewing the hologram using normal lighting conditions, the luminescent material will not be recognized from the image.

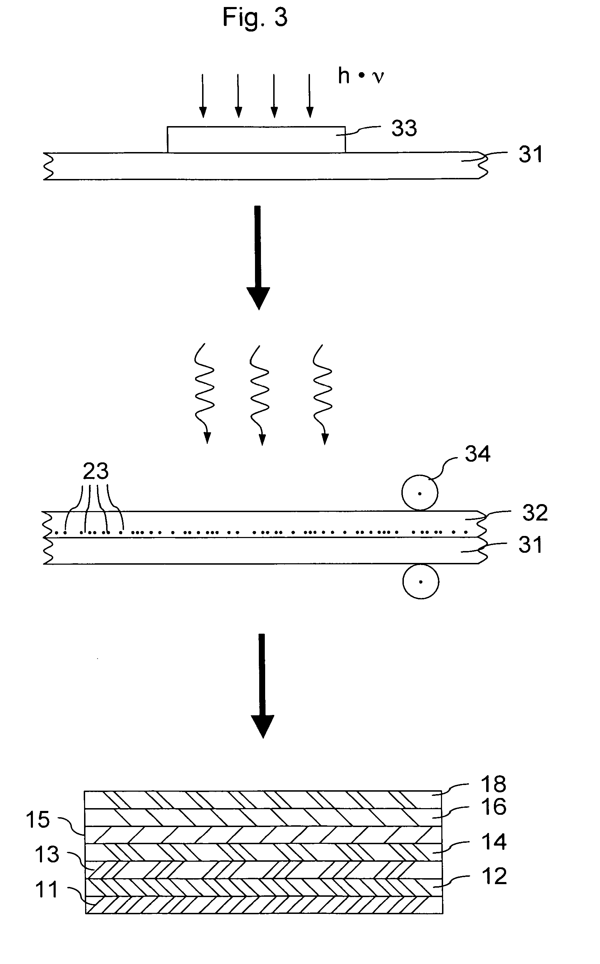

Figure 3 shows an example of a manufacturing process of a hologram. A hologram master 33 is placed over a holographic layer 31 that may comprise a photopolymer as described above. For example, the holographic layer 31 may have a thickness of 10 to 20 µm. The photopolymer layer may be coated on a suitable carrier. Then, laser light having a specific wavelength is irradiated on the master 33 so that the pattern of the master layer is copied onto the holographic layer 31. To be more specific, laser light is reflected by the hologram recorded in the master. The reflected laser light and the laser light (reference light) interfere with each other to form interference fringes. The interference fringes are recorded as changes of the refractive index of the photopolymer. For example, a laser emitting a wavelength in the range of 400 to 700 nm having a sharp wavelength distribution and a high power may be used for copying the pattern. For example, the master 33 may be moved over the holographic layer 31 so as to obtain a plurality of successively copied portions. Then, a developing step is performed so as to polymerize the remaining portions of the polymer. For example, this may be accomplished by irradiating ultraviolet rays to fully cure the ultraviolet ray curing resin. Nevertheless, depending on the properties of the photopolymer layer, any other curing method may be used. Thereafter, the luminescent material 23 may be introduced in the holographic layer 31. For example, the luminescent material 23 may be introduced in the holographic layer 31 by means of a thermo transfer or thermo re-transfer method. For example, the photo luminescent material may be disposed on a thermo transfer sheet 32. The thermo transfer sheet 32 is disposed in contact with the holographic layer 31, and heat is applied to the layer stack while simultaneously applying pressure to the layer stack so that the photo luminescent material may be incorporated into the holographic layer 31. As a result, the photo luminescent material 32 may be included in the holographic layer 31 as is also illustrated in Figure 2A. In the present example, erbium doped CaS which is luminescent at 532 nm has been taken as an example of the photo luminescent material. Nevertheless, further examples of the photo luminescent material may comprise the following:
Zn₂SiO₄:Mn,As
Gd₂O₂S:Tb
Y₂O₂S:Tb
Y₃Al₅O₁₂:Ce
Y₃Al₅O₁₂:Tb
ZnS:Cu,Al
ZnS:Cu,Au,Al
Y₂SiO₅:Tb
Y₂OS:Tb
Y₃(Al,Ga)₅O₁₂:Ce
Y₃(Al,Ga)₅O₁₂:Tb
InBO₃:Tb
(Ce,Tb)MgAl₁₁O₁₉
BaMg₂Al₁₆O₂₇:Eu(II),Mn(II)
Ce₀.₆₇Tb₀.₃₃MgAl₁₁O₁₉:Ce,Tb
Zn₂SiO₄:Mn,Sb₂O₃
LaPO₄:Ce,Tb
(La,Ce,Tb)PO₄:Ce,Tb

The luminescent material is incorporated before or after the step of developing the photopolymer. Accordingly, the photoluminescent material is disposed adjacent to one or both of the surfaces of the holographic layer. Thereafter, the holographic layer is further processed by applying the further layers by generally known processes. Then, the sheet-like layer stack will be cut into pieces to isolate the single holographic labels.

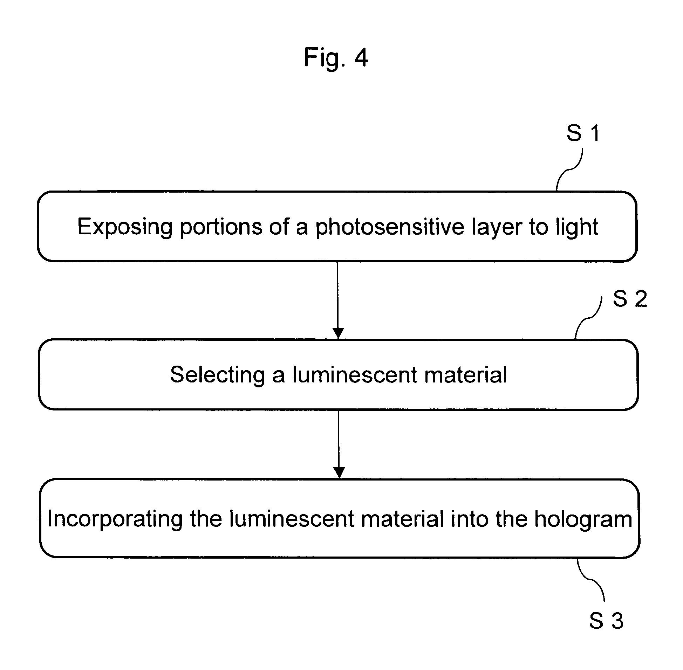

Figure 4 illustrates a method of forming a hologram. As is shown in Figure 4, the method may comprise exposing portions of a photo sensitive layer to a light source having at least a first wavelength (S1), selecting a luminescent material (S2), the luminescent material being configured to absorb the first wavelength and to emit light having a second wavelength and incorporating the luminescent material into the hologram.

As has become apparent from Figure 3, conventionally, a hologram may be faked by copying the hologram onto a further holographic layer. Due to the incorporation of the luminescent material in the hologram, for example in the holographic layer or in any other layer of the holographic layer stack, upon irradiation with the copying laser light, the luminescent material will be excited and becomes luminescent under the copying laser light. As a result, the holographic image will be outshined or blurred so that an image transfer may be made impossible. Consequently, unauthorized copying or faking of a holographic label will be prevented. Therefore, due to the incorporation of the luminescent material into the hologram, the security level of the hologram can be increased significantly.

According to a further modification, the hologram may be manufactured utilizing more than one wavelength of the irradiating laser light. This kind of holograms sometimes is referred to RGB holograms (in the case of three manufacturing wavelengths) or rainbow holograms (in the case of a plurality of manufacturing wavelengths). In this case, a plurality of luminescent materials, each absorbing a specific wavelength of the manufacturing wavelengths may be selected and incorporated into the hologram, for example, the holographic layer or any other layer of the hologram layer stack. As a further option, a luminescent material absorbing a plurality of manufacturing wavelengths can be selected and incorporated into the hologram.

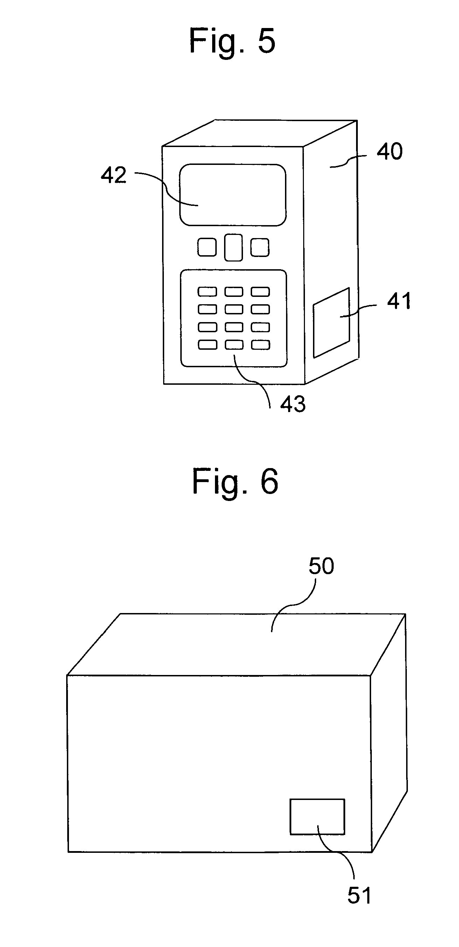

Fig. 5 shows a mobile phone 40 as an example of a device comprising a hologram 41 as described above. For example, the device may comprise a computer, portable electronic equipment such as a mobile phone, a personal digital assistant, an MP3 player, a watch, a camera, a notebook and others. The device may also comprise electronic accessories such as a memory card or a battery. The mobile phone 40 may further comprise the usual components such as a display 42 and a keypad 43. The mobile phone is only given by way of example. It is clearly to be understood, that the device may be embodied by various other electronic equipment as has been mentioned above. The hologram may be attached or adhered to the device. For example, the hologram 41 may be adhered to the device 40 so that it cannot be removed without destroying the hologram 41.

Fig. 6 shows a package 50 comprising a hologram 51 as described above. For example, the package 50 may be a package of an electronic device or equipment. Alternatively, the package may be a package of a brand product such as a specific medicine or arbitrary consumer products as exemplified by coffee, chocolate, cigarettes and others. The shape of the package 50 is given as an example. As is clearly to be understood, the shape of the package 50 may be arbitrary, depending on the products packaged by the package. The package 50 may also comprise a blister for packaging tablets or pills.

While embodiments of the invention have been described above, it is obvious that further embodiments may be implemented. For example, further embodiments may comprise any subcombination of features recited in the claims or any subcombination of elements described in the examples given above. Accordingly, this spirit and scope of the appended claims should not be limited to the description of the embodiments contained herein.

## Claims

1. A hologram comprising:
a holographic layer comprising a photosensitive layer, holographic structures being formed in the holographic layer using a light source having at least a first wavelength, and
a luminescent material, the luminescent material being configured to absorb the first wavelength, and to emit light having a second wavelength.

2. The hologram according to claim 1,
wherein the first wavelength is equal to the second wavelength.

3. The hologram according to claim 1,
wherein the luminescent material is included in the holographic layer.

4. The hologram according to claim 1,
wherein the holographic structures comprise regions having mutually different refractive indices.

5. The hologram according to claim 1,
further comprising additional holographic structures being formed in the holographic layer using a light source having at least a third wavelength, and
an additional luminescent material, the additional luminescent material being configured to absorb the third wavelength and to emit light having a fourth wavelength.

6. The hologram according to claim 1,
further comprising additional holographic structures being formed in the holographic layer using a light source having at least a third wavelength, wherein the luminescent material further is configured to absorb the third wavelength and to emit light having a fourth wavelength.

7. A method of forming a hologram, comprising:
exposing portions of a photosensitive layer to a light source having at least a first wavelength to form holographic structures in the photosensitive layer;
selecting a luminescent material, the luminescent material being configured to absorb the first wavelength, and to emit light having a second wavelength, and
incorporating the luminescent material into the hologram.

8. The method according to claim 7,
the method further comprising developing the exposed photosensitive layer,
wherein the luminescent material is incorporated into the photosensitive layer after developing the exposed photosensitive layer.

9. The method according to claim 8,
wherein the luminescent material is incorporated into the photosensitive layer by a thermotransfer method.

10. The method according to claim 7,
wherein due to exposing the portions of the photosensitive layer portions having different refractive indices are formed in the photosensitive layer.

11. The method according to claim 7,
further comprising forming additional holographic structures by exposing the photosensitive layer to an additional light source having at least a third wavelength;
selecting an additional luminescent material, the additional luminescent material being configured to absorb the third wavelength and to emit light having a fourth wavelength, and
incorporating the additional luminescent material into the hologram.

12. The method according to claim 7,
further comprising forming additional holographic structures by exposing the photosensitive layer to an additional light source having at least a third wavelength, wherein the luminescent material is selected further to absorb the third wavelength and to emit light having a fourth wavelength.

13. A device comprising the hologram according to any of claims 1 to 6.

14. The device according to claim 13, the device being an electric mobile device.

15. A package comprising the hologram according to any of claims 1 to 6.
